# EUROPÄISCHE PATENTSCHRIFT

(11) **EP 2 128 680 B1**
(45) Veröffentlichungstag und Bekanntmachung des Hinweises auf die Patenterteilung: **29.08.2012**
(21) Anmeldenummer: 09161456.0
(22) Anmeldetag: 29.05.2009
(51) Int. Cl.: G02B 23/00, G02B 27/64, F41G 1/00

(54) **Fernrohr**
Telescope
Télescope

(30) Priorität: 29.05.2008 DE 102008026978
(43) Veröffentlichungstag der Anmeldung: 02.12.2009
(73) Patentinhaber: Carl Zeiss Sports Optics GmbH, 35576 Wetzlar (DE); Carl Zeiss AG, 73447 Oberkochen (DE)
(72) Erfinder: Dobermann, Dirk, 99441 Magdala OT Ottstedt (DE); Rink, Dieter, 35606 Solms (DE); Robotta, Rainer, 07751 Jena OT Closewitz (DE); Becker, Kurt, 35435 Wettenberg (DE); Günther, Georg, 99441 Grossschwabhausen (DE); Hofmann, Jens, 07743 Jena (DE)
(74) Vertreter: Witte, Weller & Partner

(56) Entgegenhaltungen:
- EP-A- 0 376 108
- WO-A1-99/54873
- DE-A1- 2 239 426
- DE-A1- 2 414 061
- US-A- 3 845 929

## Beschreibung

Die Erfindung betrifft ein Fernrohr mit einem Gelenk zum kardanischen Lagern einer optischen Baugruppe gegenüber einem Gehäuse, wobei das Gelenk als elastisches Federgelenk ausgebildet ist.

Fernrohre der vorstehend genannten Art sind bekannt, beispielsweise aus der Druckschrift EP 0 376 108 A2. Die kardanische Lagerung der Baugruppe, üblicherweise des Umkehrsystems des Fernrohrs, dient dazu, Zitterbewegungen zu kompensieren, die vom Benutzer auf das Fernrohr übertragen werden. Das Problem der Zitterkompensation stellt sich vor allem bei Fernrohren mit langer Brennweite.

Bekannte Fernrohre verwenden mechanisch aufwendige kardanische Lagerungen, die mit hohen Fertigungskosten verbunden sind. Außerdem sind diese Fernrohre häufig empfindlich gegenüber Stossbelastungen.

Der Erfindung liegt die Aufgabe zugrunde, ein Fernrohr der eingangs genannten Art dahingehend weiterzubilden, dass die vorstehend genannten Nachteile vermieden werden. Insbesondere soll es möglich werden, eine Zitterkompensation in einem Fernrohr zu realisieren, die mit niedrigeren Kosten herstellbar und gleichzeitig robust im Einsatz ist.

Bei einem Fernrohr der eingangs genannten Art wird diese Aufgabe erfindungsgemäß dadurch gelöst, dass das Gelenk ein erstes Gelenkteil, ein zweites Gelenkteil und ein drittes Gelenkteil aufweist, die nebeneinander entlang einer Achse angeordnet sind, dass das erste Gelenkteil mit dem zweiten Gelenkteil über zwei erste, einander relativ zur Achse diametral gegenüber liegender und in einer Radialebene liegender Blattfedern verbunden ist, dass das zweite Gelenkteil mit dem dritten Gelenkteil über zwei zweite, einander relativ zur Achse diametral gegenüber liegender und in der Radialebene liegender Blattfedern verbunden ist, dass die Paare von Blattfedern mit ihren Bereichen zwischen den Befestigungspunkten mit den Gelenkteilen eine erste Gelenkachse und eine zweite Gelenkachse definieren, und dass die Gelenkachsen senkrecht aufeinander stehen, wobei die Gelenkteile einander zu weisende Vorsprünge aufweisen, die über den Umfang versetzt angeordnet sind und an deren radialen Stirnflächen die Blattfedern befestigt sind.

Die der Erfindung zugrunde liegende Aufgabe wird auf diese Weise vollkommen gelöst.

Durch die Verwendung von elastischen Federgelenken werden teure mechanische Lager vermieden. Federgelenke sind darüber hinaus wenig empfindlich gegenüber mechanischen Stossbelastungen.

Diese Maßnahme hat wiederum den Vorteil, dass das Gelenk kompakt ausgebildet ist.

Weitere Vorteile ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Seitenansicht eines ersten, nicht zur Erfindung gehörenden Ausführungsbeispiels eines Gelenks;
- Figur 2: eine perspektivische Ansicht des Gelenks von Figur 1;
- Figur 3: in stark vergrößertem Maßstab eine Seitenansicht einer monolithischen Gelenkstelle, wie sie bei dem Gelenk von Figur 1 verwendet wird;
- Figur 4: eine Explosionsdarstellung eines zweiten, nicht zur Erfindung gehörenden Ausführungsbeispiels eines Gelenks;
- Figur 5: eine Draufsicht auf eine Membranfederscheibe, wie sie bei dem Ausführungsbeispiel von Figur 4 verwendet wird;
- Figur 6: eine Explosionsdarstellung eines dritten, nicht zur Erfindung gehörenden Ausführungsbeispiels eines Gelenks;
- Figur 7: eine Explosionsdarstellung eines vierten, nicht zur Erfindung gehörenden Ausführungsbeispiels eines Gelenks;
- Figur 8: eine erste radiale Schnittdarstellung des Ausführungsbeispiels von Figur 7 entlang der Linie VIII-VIII der Figur 9;
- Figur 9: eine zweite radiale Schnittdarstellung des Ausführungsbeispiels von Figur 7 entlang der Linie IX-IX der Figur 8;
- Figur 10: eine vergrößerte Darstellung eines Torsionsfederelements, wie es beim Ausführungsbeispiel der Figur 7 verwendet wird;
- Figur 11: eine perspektivische Darstellung eines fünften erfindungsgemäßen Ausführungsbeispiel eines Gelenks;
- Figur 12: eine Explosionsdarstellung des Ausführungsbeispiels von Figur 11; und
- Figur 13: eine axiale Ansicht des Ausführungsbeispiels von Figur 11, teilweise montiert.

Die Erfindung betrifft Gelenke, die in einem optischen Gerät, insbesondere in einem Fernrohr, zum elastischen Aufhängen einer optischen Baugruppe verwendet werden. Die Baugruppe, insbesondere ein Umkehrsystem in einem Fernrohr, soll durch die Aufhängung gegen Zitterbewegungen im Raum stabilisiert werden. Dies geschieht vorzugsweise passiv, indem die erforderlichen Stabilisierungskräfte lediglich durch die Trägheitskräfte der massebehafteten Baugruppe aufgebracht werden.

Die Gelenke sind als kardanische Federgelenke ausgebildet. Sie weisen zwei zueinander senkrecht verlaufende Gelenkachsen auf, die durch jeweils zwei Federgelenkstellen definiert sind und jeweils eine Verdrehung um beispielsweise etwa ±5° gestatten. Die Gelenkachsen spannen dabei eine Ebene auf und schneiden sich in einem zentralen Punkt, der auf der Achse der im Wesentlichen zylinderförmigen Gelenke liegt. Die Federgelenkstellen sind vorzugsweise gleich weit von dem zentralen Punkt entfernt.

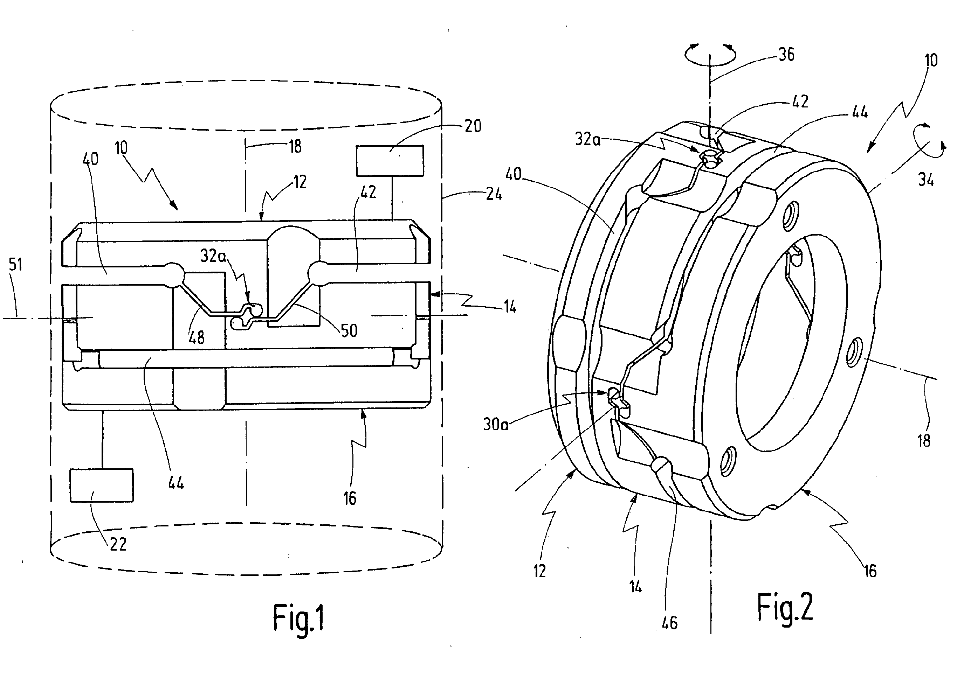

Die Figuren 1 bis 3 zeigen ein erstes, nicht zur Erfindung gehörendes Ausführungsbeispiel eines Gelenks 10.

Das Gelenk 10 hat eine im Wesentlichen zylindrische Gestalt und ist damit an die Gestalt eines bei Fernrohren üblichen Tubus angepasst, in den es eingesetzt wird. Das Gelenk 10 weist ein erstes, in Figur 2 linkes Gelenkteil 12, ein zweites, in Figur 2 mittleres Gelenkteil 14, sowie ein drittes, in Figur 2 rechtes Gelenkteil 16 auf. Die Achse des zylinderförmigen Gelenks 10 ist mit 18 bezeichnet und die Gelenkteile 12, 14 und 16 sind dicht nebeneinander mit nur geringfügigem Abstand zueinander angeordnet. Die Gelenkteile 12, 14 und 16 sind monolithisch, d.h. sie bestehen aus einem gemeinsamen Block. Sie sind nur über Federgelenkstellen beweglich miteinander verbunden, wie noch erläutert werden wird.

Das Gelenk 10 dient zum elastisch-beweglichen Verbinden eines bei 20 symbolisierten Gehäuses mit einer bei 22 symbolisierten optischen Baugruppe, beispielsweise einem Umkehrsystem in einem nur schematisch angedeuteten Fernrohr 22. Zu diesem Zweck ist das Gelenk mit zwei Paaren von Federgelenkstellen versehen, nämlich einem ersten Paar 30a und 30b sowie einem zweiten Paar 32a, 32b, von denen in den Figuren 1 und 2 nur die Federgelenkstellen 30a und 32a zu sehen sind.

Die ersten Federgelenkstellen 30a und 30b liegen an dem Gelenk 10 einander diametral gegenüber und definieren eine erste Gelenkachse 34, die quer zur Achse 18 verläuft. Die ersten Federgelenkstellen 30a und 30b verbinden das zweite Gelenkteil 14 mit dem dritten Gelenkteil 16, so dass diese Gelenkteile 14, 16 um die erste Gelenkachse 34 gegeneinander verdrehbar sind.

Die zweiten Federgelenkstellen 32a und 32b liegen, in Umfangsrichtung zu den ersten Federgelenkstellen 30a, 30b um 90° versetzt, also ebenfalls an dem Gelenk 10 einander diametral gegenüber und definieren eine zweite Gelenkachse 36, die quer zur Achse 18 und zur ersten Gelenkachse 34 verläuft. Die zweiten Federgelenkstellen 32a und 32b verbinden das erste Gelenkteil 12 mit dem zweiten Gelenkteil 14, so dass diese Gelenkteile 12, 14 um die zweite Gelenkachse 36 gegeneinander verdrehbar sind.

Da die Gelenkteile 12, 14 und 16, wie bereits erwähnt, monolithisch ausgebildet sind, gilt dies naturgemäß auch für die Federgelenkstellen 30a, 30b und 32a, 32b. Das erste Gelenkteil 12 ist vom zweiten Gelenkteil 14 durch einen ersten breiten Schlitz 40 und einen zweiten breiten Schlitz 42 getrennt, die sich von beiden Seiten über etwa ein Drittel des Durchmessers erstrecken. Entsprechendes gilt für das zweite und das dritte Gelenkteil 14, 16, die, wiederum in Umfangsrichtung um 90°versetzt, durch einen dritten und einen vierten breiten Schlitz 44, 46 voneinander getrennt sind.

In dem verbleibenden mittleren Drittel sind die Gelenkteile 12 und 14 ferner durch einen ersten schmalen Schlitz 50 sowie einen zweiten schmalen Schlitz 52 voneinander getrennt und entsprechend auch die Gelenkteile 14 und 16. Die schmalen Schlitze 50, 52 verlaufen in einem Bereich, in dem die Gelenkteile 12, 14, 16 hohlzylindrisch sind.

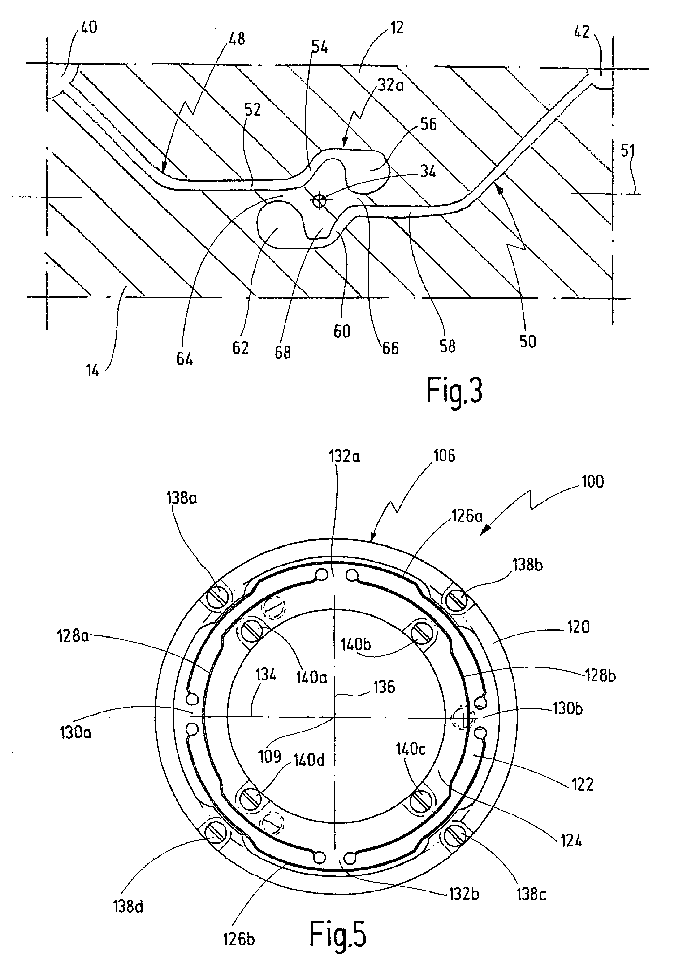

Figur 3 zeigt nun exemplarisch Einzelheiten der monolithischen Federgelenkstelle 32a. Wie man deutlich sieht, führen die schmalen Schlitze 48 und 50 von den breiten Schlitzen 40 und 42 zunächst schräg in den Bereich einer radialen Längsmittelebene 51 des Gelenks 10, in der die Gelenkachsen 34 und 36 liegen. Der schmale Schlitz 48 geht dort in einen ersten geraden Abschnitt 52 über, der sich dann wieder entlang eines ersten gebogenen Abschnitts 54 von der Längsmittelebene 51 entfernt, um dann in einem ersten erweiterten Endabschnitt 56 zu enden, der sich wieder nahe bis zur Längsmittelebene 51 erstreckt. In klappsymmetrischer Weise verläuft der zweite schmale Schlitz 50 mit zweiten Abschnitten 58, 60 und 62.

Im Ergebnis führt dies zu einer Formgebung, bei der sich jeweils die geraden Abschnitte 52 und 58 und die erweiterten Abschnitte 56 und 62 mit geringem Abstand beidseits der Längsmittelebene 51 gegenüberstehen. Dadurch verbleibt dort jeweils nur ein dünner Steg 64 bzw. 66 mit schmalem, rechteckigem Materialquerschnitt. Die erste Gelenkachse 34 befindet sich dann im Zentrum eines zwischen den Stegen 64, 66 verbleibenden verdickten Bereichs 68.

Wenn nun das erste Gelenkteil 12 gegenüber dem zweiten Gelenkteil 14 um die erste Gelenkachse 34 verdreht wird, dann verbiegen sich die Stege 64 und 66. Dadurch verschiebt sich die erste Gelenkachse 34 in der Darstellung von Figur 3 geringfügig nach oben bzw. nach unten, was aber bei Anwendungen in einem Fernrohr nicht stört. die. Durch die vorstehend beschriebene Formgebung mit zwei Stegen 64 und 66 wird die Beanspruchung durch die Biegung nun auf diese zwei Stege 64 und 66 verteilt, so dass in jedem der Stege 64, 66 nur eine geringe Biegespannung wirkt.

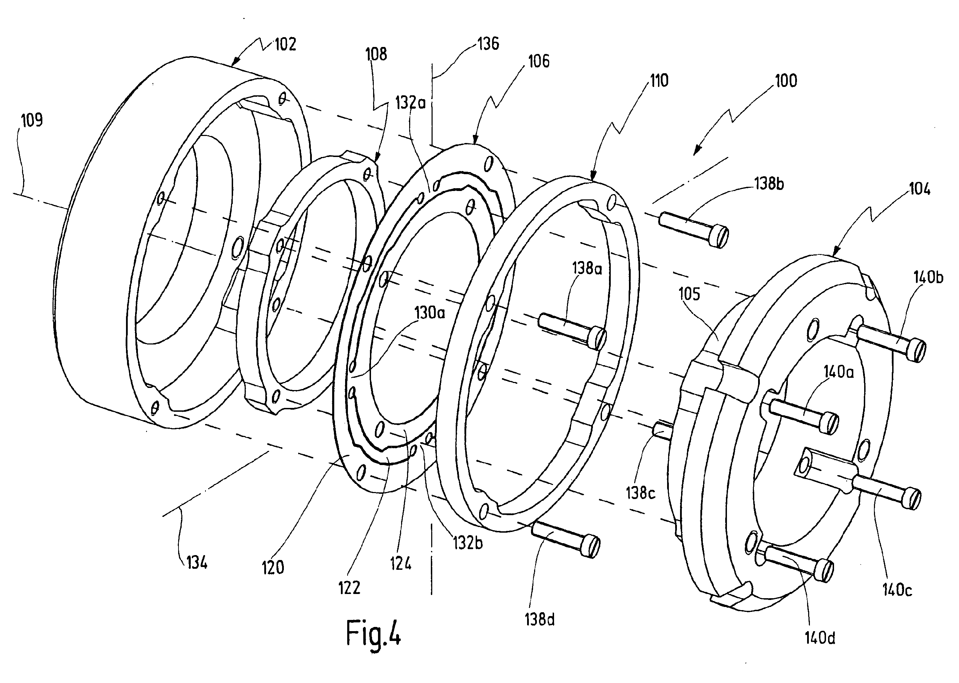

Die Figuren 4 und 5 zeigen ein zweites, nicht zur Erfindung gehörendes Ausführungsbeispiel eines Gelenks 100.

Das Gelenk 100 weist ein erstes Gelenkteil 102 sowie ein zweites Gelenkteil 104 auf. Das zweite Gelenkteil 104 ist mit einem axialen Vorsprung 105 versehen, der sich im zusammengebauten Zustand auf das erste Gelenkteil 102 zu erstreckt. Zwischen den Gelenkteilen befinden sich ein Membranfederring 106 sowie ein erster Montagering 108 und ein zweiter Montagering 110. Die vorgenannten Elemente sind in der Reihenfolge 102-108-106-110-104 nebeneinander entlang einer Achse 109 des Gelenks 100 angeordnet.

Der Membranfederring 106, dessen Einzelheiten in Figur 5 gezeigt sind, ist in drei konzentrische Bereiche unterteilt, nämlich einen äußeren Ringabschnitt 120, einen mittleren Ringabschnitt 122 und einen inneren Ringabschnitt 124. Der äußere Ringabschnitt 120 ist vom mittleren Ringabschnitt 122 durch zwei erste Halbringschlitze 126, 126b getrennt. Der mittlere Ringabschnitt 122 ist vom inneren Ringabschnitt 124 durch zwei zweite Halbringschlitze 128a, 128b getrennt, die gegenüber den ersten Halbringschlitzen 126a, 126b in Umfangsrichtung um 90° versetzt sind. Die Enden der ersten Halbringschlitze 126a, 126b sind voneinander beabstandet und bilden dort erste Federgelenkstellen 130a, 130b. Die Enden der zweiten Halbringschlitze 128a, 128b sind voneinander beabstandet und bilden dort zweite Federgelenkstellen 132a, 132b. Die ersten Federgelenkstellen 130a, 130b definieren eine erste Gelenkachse 134 und die zweiten Federgelenkstellen 132a, 132b definieren eine zweite Gelenkachse 136. Die Gelenkachsen 134 und 136 stehen aufeinander und auf der Achse 109 senkrecht.

Mittels vier um jeweils 90° über den Umfang verteilter erster axial angeordneter Schrauben 138a - 138d sind der zweite Montagering 110 und der Membranfederring 106 an das erste Gelenkteil 102 geschraubt. Die ersten Schrauben 138a - 138d fixieren den Membranfederring 106 dabei im Bereich des äußeren Ringabschnitts 120 und zwar um +45° bzw. -45° gegenüber den zweiten Federgelenkstellen 132a, 132 b versetzt.

Mittels vier um jeweils 90° über den Umfang verteilter zweiter axial angeordneter Schrauben 140a - 140d, die den axialen Vorsprung 105 durchsetzen, sind das zweite Gelenkteil 104 und der Membranfederring 106 mit dem ersten Montagering 108 verschraubt. Die zweiten Schrauben 140a - 140d fixieren den Membranfederring 106 dabei im Bereich des inneren Ringabschnitts 124 und zwar um +45° bzw. -45° gegenüber den ersten Federgelenkstellen 130a, 130 b versetzt. Die axialen Dimensionen sind dabei so gewählt, dass der Membranfederring 108 in der Ruhestellung in einer radialen Mittelebene des Gelenks angeordnet ist

Das erste Gelenkteil 102 kann sich damit sowohl um die erste Gelenkachse 134 als auch um die zweite, dazu senkrechte Gelenkachse 136 relativ zum zweiten Gelenkteil 104 verdrehen.

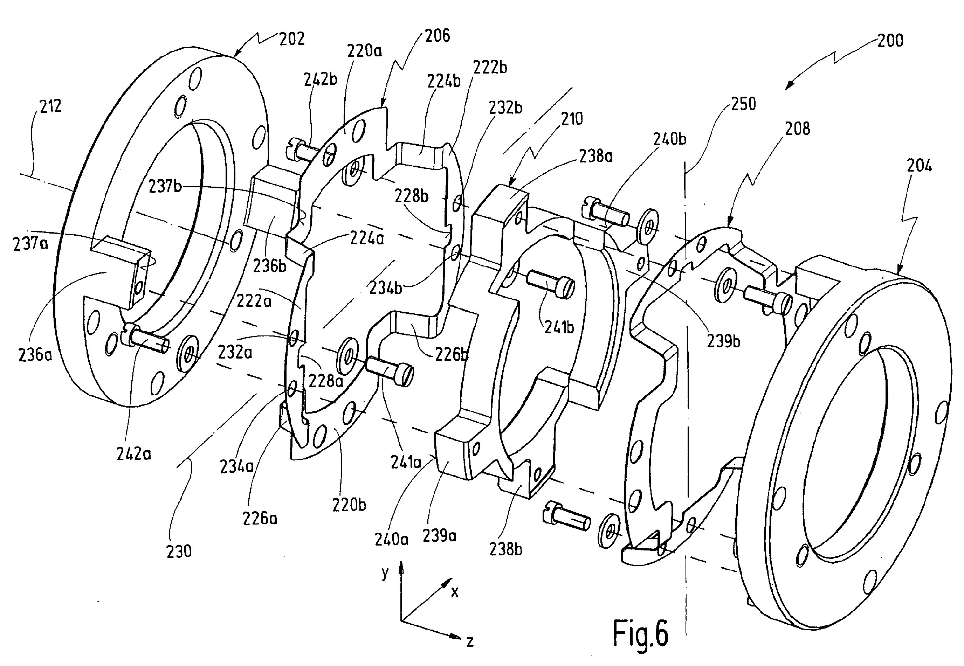

Figur 6 zeigt ein drittes, nicht zur Erfindung gehörendes Ausführungsbeispiel eines erfindungsgemäßen Gelenks 200.

Das Gelenk 200 weist ein erstes Gelenkteil 202, ein zweites Gelenkteil 204, einen ersten Biegefederring 206 sowie einen zweiten Biegefederring 208 auf. Die vorgenannten Elemente sind in einer Reihenfolge 202-206-210-208-204 nebeneinander entlang einer gemeinsamen Achse 212 angeordnet.

Zur Veranschaulichung wird Bezug auf ein kartesisches Koordinatensystem x-y-z genommen, dessen z-Achse mit der Achse 212 zusammenfällt, so dass die x- und die y-Achse sich in radialer Richtung erstrecken.

Der erste Biegefederring 206 ist mit ersten bogenförmigen Abschnitten 220a und 220b versehen, die sich in x-Richtung erstrecken und sich auf diametral gegenüberliegenden Seiten befinden. Ferner sind im axialen Abstand dazu zweite bogenförmige, ebenfalls einander diametral gegenüberliegende Abschnitte 222a, 222b vorgesehen, die sich in y-Richtung erstrecken. Diese Abschnitte 220a, 220b und 222a, 222b sind miteinander über erste gerade Abschnitte 224a, 224b bzw. zweite gerade Abschnitte 226a, 226b verbunden, die den axialen Abstand überbrücken und leicht zur Achse 212 geneigt verlaufen.

Die zweiten bogenförmigen Abschnitte 222a, 222b sind mittig mit Aussparungen 228a und 228b versehen, so dass Material-Engstellen entstehen, die eine erste Gelenkachse 230 definieren, die in x-Richtung verläuft. Beidseits dieser ersten Gelenkachse 230 sind Löcher 232a, 232b bzw. 234a, 234b vorgesehen.

Das erste Gelenkteil 202a weist auf seiner dem ersten Biegefederring 206 zugewandten Radialfläche axiale Vorsprünge 236a und 236b auf, die einander diametral gegenüber stehen und radiale Stirnflächen 237a, 23 7b aufweisen.

Der Montagering 210 ist auf seiner dem ersten Biegefederring 206 zu weisenden Seite mit zwei einander diametral gegenüberliegenden axialen Vorsprüngen 238a und 238b versehen, die relativ zu den axialen Vorsprüngen 236a und 236b um 90° in Umfangsrichtung versetzt sind und radiale Stirnflächen 239a bzw. 239b aufweisen. Auf der dem zweiten Biegefederring 208 zu weisenden Seite ist der Montagering 210 mit zwei weiteren axialen Vorsprüngen 239a und 239b versehen, die ebenfalls einander diametral gegenüberstehen, axial von den axialen Vorsprüngen 238a und 238b beabstandet und relativ zu diesen um 90° in Umfangsrichtung versetzt sind.

Mittels erster Schrauben 241a und 241b ist der erste Biegefederring 206 mit dem ersten Gelenkteil 202 verschraubt, und zwar durch die Löcher 232a und 234b, wobei die Schrauben 241a, 241b axial in die Stirnflächen 237a, 237b der Vorsprünge 236a, 236b eingeschraubt sind. Mittels zweiter Schrauben 242a und 242b ist der erste Biegefederring 206 mit dem Montagering 210 verschraubt, und zwar durch die Löcher 234a und 232b in die Stirnflächen 240a und 240b der Vorsprünge 239a bzw. 239b.

Die Vorsprünge 236a und 239a sind über den Umfang versetzt angeordnet, ebenso wie die Vorsprünge 236b und 239b. Der Abstand zwischen den genannten Vorsprüngen wird durch die bogenförmigen Abschnitte 222a, 222b überbrückt, wobei sich die Aussparungen 228a, 228b zwischen den Vorsprüngen befinden.

Die selbe Konfiguration findet sich klappsymmetrisch und um 90° in Umfangsrichtung versetzt zwischen dem Montagering 210 und dem zweiten Gelenkteil 204, so dass im Ergebnis eine zweite Gelenkachse 250 entsteht, die relativ zur ersten Gelenkachse 230 um 90° gedreht ist, sich aber in der selben Radialebene befindet, die zwischen den axialen Vorsprüngen 238a, 238b und 239a, 239b liegt.

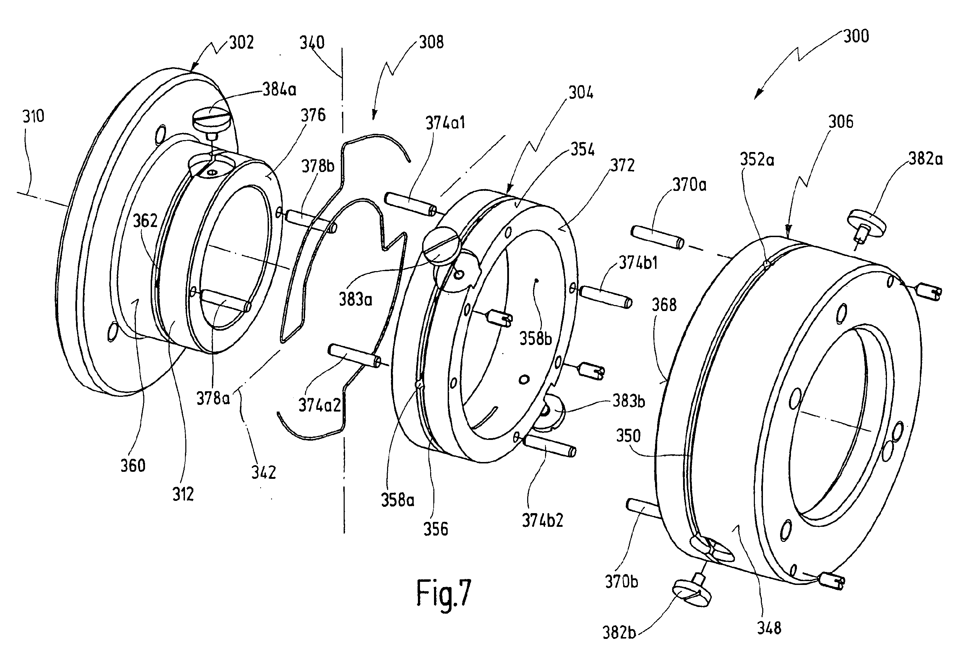

Die Figuren 7 bis 10 zeigen ein viertes, nicht zur Erfindung gehörendes Ausführungsbeispiel eines erfindungsgemäßen Gelenks 300.

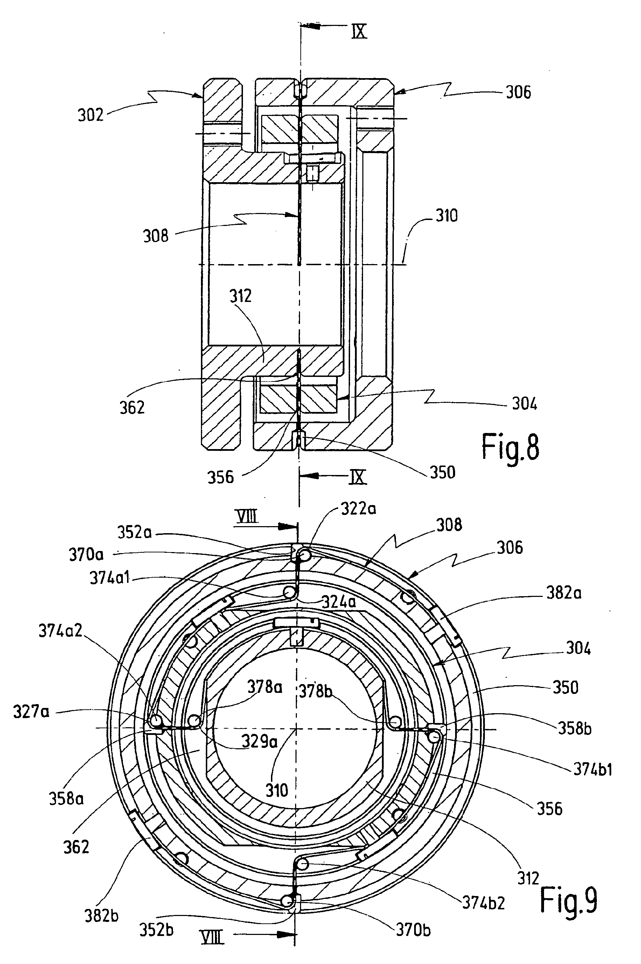

Das Gelenk 300 weist ein erstes Gelenkteil 302, ein zweites Gelenkteil 304 und ein drittes Gelenkteil 306 auf sowie ein Torsionsfederteil 308. Die vorgenannten Elemente sind koaxial nebeneinander bzw. ineinander (vgl. Figur 8) entlang einer Achse 310 angeordnet. Das erste Gelenkteil 302 ist dabei mit einem axialen Vorsprung 312 versehen, der sich in eine zentrale Öffnung des zweiten Gelenkteils 304 erstreckt. Das zweite Gelenkteil 304 befindet sich seinerseits innerhalb des dritten Gelenkteils 306. Das Torsionsfederteil 308 ist in der radialen Mittelebene des Gelenks 300 angeordnet und verbindet die Gelenkteile 302, 304 und 306 miteinander, wie nachstehend erläutert wird.

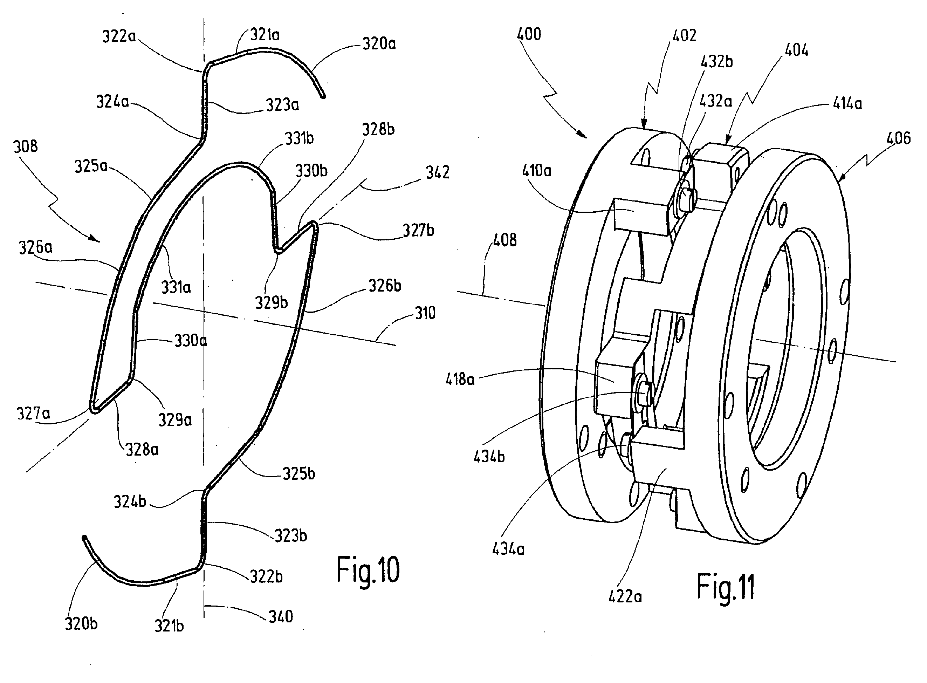

Figur 10 zeigt Einzelheiten des Torsionsfederteils 308. Das Torsionsfederteil 308 besteht aus einem Stück eines federnden Drahtes, der innerhalb einer Ebene in folgender Weise abschnittsweise gebogen ist:

An seinem in Figur 10 oberen freien Ende ist ein erster, nach oben gebogener Abschnitt 320a vorgesehen, an den sich ein horizontaler erster gerader Abschnitt 321a anschließt. An dessen Ende befindet sich ein erster, nach links unten führender 90°-Bogen 322a. Daran schließt sich ein erster, vertikaler gerader Torsionsabschnitt 323a an, dann folgen ein zweiter, nach links führender 90°-Bogen 324a, ein zweiter, schräg nach links unten führender gerader Abschnitt 325a, ein zweiter, nach unten weisender gebogener Abschnitt 326a, ein nach rechts führender dritter 90°-Bogen 327a, ein zweiter, horizontaler gerader Torsionsabschnitt 328a, ein vierter, nach oben führender 90°-Bogen, ein dritter, schräg nach rechts oben führender gerader Abschnitt 330a und schließlich ein dritter, nach rechts oben gebogener Abschnitt 331a, der in einer Flucht mit dem ersten Torsionsabschnitt 323a endet.

Der Begriff "90°-Bogen" ist in der vorstehenden Beschreibung nicht auf den exakten Wert von 90° bezogen sondern nur als Näherungswert zu verstehen. Unter "gebogen" ist ein Verlauf zu verstehen, der im Wesentlichen auf einer Kreislinie um die Achse 310 liegt.

An den dritten gebogenen Abschnitt 331a schließen sich nun spiegelsymmetrisch zu einer den ersten Torsionsabschnitt 323a enthaltenden Vertikalachse Abschnitte 331b, 330b und 328b an. Von da an ist das Torsionsfederteil 308 punktsymmetrisch zum Schnittpunkt der genannten Vertikalachse und der Achse 310 ausgebildet und setzt sich daher vom Abschnitt 328b mit Abschnitten 326b, 325b, 324b, 323b, 322b, 321b und 320b fort, wobei die mit "b" bezeichneten Abschnitte in ihrer punktsymmetrischen Anordnung den weiter oben mit "a" bezeichneten Abschnitten entsprechen.

Das Torsionsfederteil 308 definiert damit zwei aufeinander senkrecht stehende Gelenkachsen, nämlich eine erste, vertikale Gelenkachse 340, in der die beiden vertikalen, ersten geraden Torsionsabschnitte 323a und 323b wirken, sowie eine zweite, horizontale Gelenkachse 342, in der die beiden horizontalen, zweiten geraden Torsionsabschnitte 328a und 328b wirken.

Eine zylindrische Oberfläche 348 des dritten Gelenkteils 306 ist mit einer ersten Umfangsnut 350 versehen. In der ersten Umfangsnut 350 sind radiale, entlang eines Durchmessers miteinander fluchtende Durchgangsbohrungen 352a und 352b vorgesehen.

Eine zylindrische Oberfläche 354 des zweiten Gelenkteils 304 ist mit einer zweiten Umfangsnut 356 versehen. In der zweiten Umfangsnut 356 sind radiale, entlang eines Durchmessers miteinander fluchtende Durchgangsbohrungen 358a und 358b vorgesehen.

Eine zylindrische Oberfläche 360 des ersten Gelenkteils 302 ist mit einer dritten Umfangsnut 362 versehen.

In eine erste radiale Stirnseite 368 des dritten Gelenkteils 306 sind zwei erste axiale Stifte 370a und 370b an diametral und symmetrisch zur Achse 310 gegenüberliegenden Positionen eingesetzt.

In eine zweite radiale Stirnseite 372 des zweiten Gelenkteils 304 sind vier zweite axiale Stifte 374a1, 374a2, 374b1 und 374b2 an diametral und symmetrisch zur Achse 310 gegenüberliegenden Positionen eingesetzt. Die zweiten Stifte 374a1 und 3742b fluchten dabei radial in etwa mit den ersten Stiften 370a und 370b, wie aus Figur 9 folgt.

In eine dritte radiale Stirnseite 376 des axialen Vorsprungs 312 des ersten Gelenkteils 302 sind zwei dritte axiale Stifte 380a und 380b an diametral und symmetrisch zur Achse 310 gegenüberliegenden Positionen eingesetzt. Die dritten Stifte 380a und 380b fluchten dabei radial in etwa mit den zweiten Stiften 374a2 und 374b1, wie aus Figur 9 folgt.

Wie man aus dem Axialschnitt der Figur 8 erkennt, sind die drei Gelenkteile 302, 304 und 306 des Gelenks 300 derart miteinander verbunden, dass sich die drei Umfangsnuten 350, 356 und 362 miteinander fluchtend in der radialen Mittelebene befinden. Das Torsionsfederteil ist in diese drei Umfangsnuten 350, 356 und 362 eingelegt und mit seinen 90°-Bögen 322a, b, 324a, b, 327a, b und 329a, b um die Stifte 370a, b, 374a1, a2, b1 b2 und 380a, b gewunden.

Aus Figur 9 erkennt man, dass der erste gebogene Abschnitt 320a auf dem Grund der ersten Umfangsnut 350 aufliegt. Der erste 90°-Bogen 322a windet sich um den ersten Stift 370a. Der erste Torsionsabschnitt 323a führt durch die radiale Bohrung 352a. Der zweite 90°-Bogen 324a windet sich um den zweiten Stift 374a1. Der zweite gebogene Abschnitt 326a liegt auf dem Grund der zweiten Umfangsnut 356 auf. Der dritte 90°-Bogen 327a windet sich um den zweiten Stift 374a2. Der zweite Torsionsabschnitt 328a führt durch die radiale Bohrung 358a. Der dritte gebogene Abschnitt 331 a liegt auf dem Grund der dritten Umfangsnut 362 auf. Von da aus setzt sich der Weg der Abschnitte 331b bis 320b des Torsionsfederteils 308 in der oben beschriebenen spiegel- bzw. klappsymmetrischen Weise fort.

Im Ergebnis kann sich dadurch das erste Gelenkteil 302 um die zweite, horizontale Gelenkachse 342 relativ zum zweiten Gelenkteil 304 drehen und das zweite Gelenkteil 304 um die erste, vertikale Gelenkachse 340 relativ zum dritten Gelenkteil 306. Der Verdreh- oder Drillwinkel beträgt dabei vorzugsweise ± 5°, wobei sich dieser Winkel beispielsweise über die Länge der Torsionsabschnitte 323 und 328 einstellen lässt.

Das Gelenk 300 kann mit seinen freien, d.h. nicht unter Spannung auf dem Grund der Umfangsnuten 350, 356 und 362 aufliegenden Abschnitten, außer der Drehbewegung um die Gelenkachsen 340 und 342 auch axiale und radiale Bewegungen aufnehmen und abfedern.

Das Gelenk 300 kann hinsichtlich der Drehbewegung um die Gelenkachsen 340 und 342 auch durch vier separate Torsionsstäbe dargestellt werden.

Die Figuren 11 bis 13 zeigen ein fünftes erfindungsgemäßes Ausführungsbeispiel eines Gelenks 400.

Das Gelenk 400 weist ein erstes Gelenkteil 402, ein zweites Gelenkteil 404 und ein drittes Gelenkteil 406 auf, die nebeneinander entlang einer Achse 408 angeordnet sind.

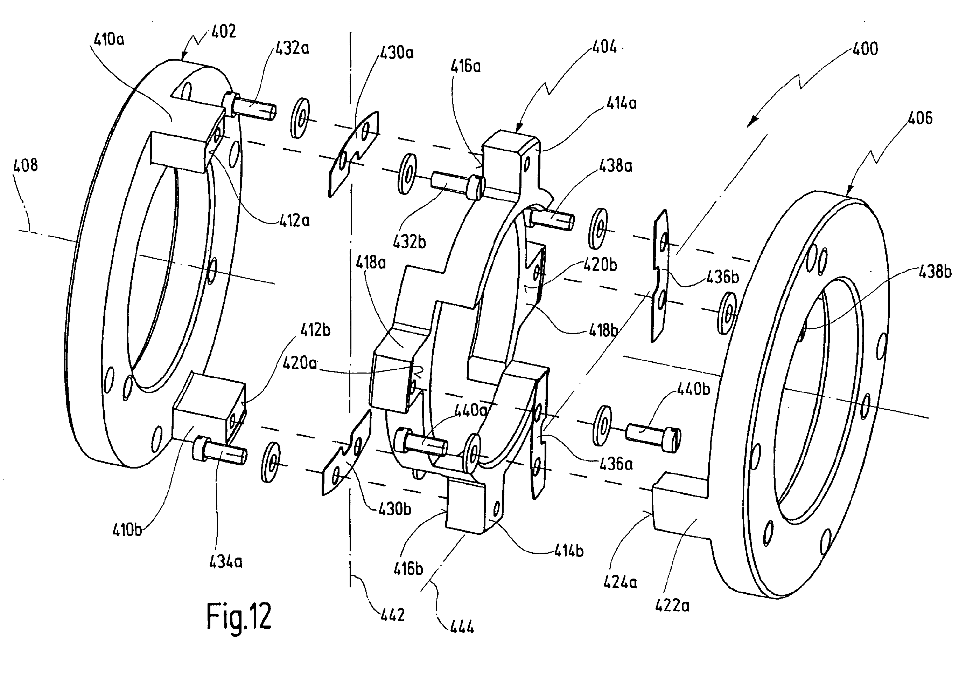

Das erste Gelenkteil 402 weist zwei erste, einander diametral gegenüber liegende axiale Vorsprünge 410a und 410b auf, die symmetrisch zur Achse 408 angeordnet sind und in Figur 12 nach rechts weisen. Die Vorsprünge 410a und 410b haben erste radiale Stirnseiten 412a bzw. 412b.

Das zweite Gelenkteil 404 weist zwei zweite einander diametral gegenüber liegende axiale Vorsprünge 414a, 414b auf, die symmetrisch zur Achse 408 angeordnet sind und in Figur 12 nach links weisen. Die Vorsprünge 414a und 414b haben zweite radiale Stirnseiten 416a bzw. 416 b.

Das zweite Gelenkteil 404 weist ferner zwei dritte einander diametral gegenüber liegende axiale Vorsprünge 418a, 418b auf, die symmetrisch zur Achse 408 angeordnet sind und in Figur 12 nach rechts weisen. Die Vorsprünge 416a und 416b haben dritte radiale Stirnseiten 420a bzw. 420b.

Das dritte Gelenkteil 406 weist zwei vierte einander diametral gegenüber liegende axiale Vorsprünge 422a, 422b auf, die symmetrisch zur Achse 408 angeordnet sind und in Figur 12 nach links weisen. Die Vorsprünge 422a und 422b haben zweite radiale Stirnseiten 424a bzw. 424b.

Eine obere erste horizontale Blattfeder 430a ist mit ihrer in Figur 12 rechten Seite mittels einer Schraube 432a an die Stirnfläche 416a des oberen zweiten Vorsprungs 414a und mit ihrer linken Seite mittels einer Schraube 432b an die Stirnfläche 412a des oberen ersten Vorsprungs 410a geschraubt. Eine untere erste Blattfeder 430b ist mit ihrer in Figur 12 rechten Seite mittels einer Schraube 434b an die Stirnfläche 412b des unteren ersten Vorsprungs 410b und mit ihrer linken Seite mittels einer Schraube 434a an die Stirnfläche 416b des unteren zweiten Vorsprungs 414b geschraubt.

In entsprechender Weise sind zweite vertikale Blattfedern 436a, 436b mittels Schrauben 438a, b und 440a, b zwischen dem zweiten Gelenkteil 404 und dem dritten Gelenkteil 406 verschraubt, wie im einzelnen in Figur 12 zu sehen.

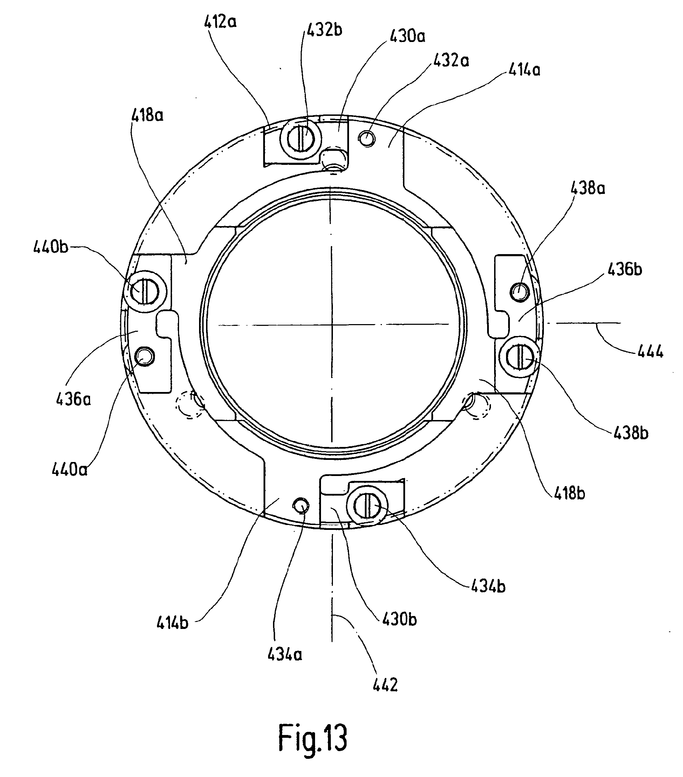

Die Vorsprünge 414 und 418 am zweiten Gelenkteil 404 sind axial derart versetzt, dass alle Blattfedern 430a, 430b und 436a, 436b in der selben radialen Mittelebene des Gelenks 400 liegen, wie deutlich in Figur 11 dargestellt. Figur 13 zeigt ferner, dass die Vorsprünge 410a, 410b, 4141a, 414b, 418a, 418b und 422a, 422b derart über den Umfang verteilt sind, dass mittlere Bereiche der Blattfedern 430a, 430b und 436a, 436b um 90° über den Umfang verteilt sind und damit eine erste, vertikale Gelenkachse 442 sowie eine zweite, horizontale Gelenkachse 444 bilden.

Das erste Gelenkteil 402 kann sich somit um die erste Gelenkachse 442 relativ zu dem zweiten Gelenkteil 404 verdrehen und gleichermaßen das zweite Gelenkteil 404 um die zweite Gelenkachse 444 relativ zum dritten Gelenkteil 406.

## Patentansprüche

1. Fernrohr mit einem Gelenk (400) zum kardanischen Lagern einer optischen Baugruppe (20) gegenüber einem Gehäuse (22), wobei das Gelenk (400) als elastisches Federgelenk ausgebildet ist, **dadurch gekennzeichnet, dass** das Gelenk (400) ein erstes Gelenkteil (402), ein zweites Gelenkteil (404) und ein drittes Gelenkteil (406) aufweist, die nebeneinander entlang einer Achse (408) angeordnet sind, dass das erste Gelenkteil (402) mit dem zweiten Gelenkteil (404) über zwei erste, einander relativ zur Achse (408) diametral gegenüber liegender und in einer Radialebene liegender Blattfedern (430a, 430b) verbunden ist, dass das zweite Gelenkteil (404) mit dem dritten Gelenkteil (406) über zwei zweite, einander relativ zur Achse (408) diametral gegenüber liegender und in der Radialebene liegender Blattfedern (436a, 436b) verbunden ist, dass die Paare von Blattfedern (430a/430b, 436a/436b) mit ihren Bereichen zwischen den Befestigungspunkten mit den Gelenkteilen (402, 404, 406) eine erste Gelenkachse (442) und eine zweite Gelenkachse (444) definieren, und dass die Gelenkachsen (442, 444) senkrecht aufeinander stehen, wobei die Gelenkteile (402, 404, 406) einander zu weisende Vorsprünge (410a, 410b, 414a, 414b, 418a, 418b, 424a, 424b) aufweisen, die über den Umfang versetzt angeordnet sind und an deren radialen Stirnflächen die Blattfedern (430a, 430b, 436a, 436b) befestigt sind.

## Claims

1. A telescope comprising a joint (400) for universally bearing an optical assembly (20) relative to a housing (22), wherein said joint (400) being designed as a leaf spring joint, **characterized in that** said joint (400) has a first joint part (402), a second joint part (404) and a third joint part (406) which are arranged next to one another along an axis (408), wherein said first joint part (402) is connected to said second joint part (404) via two first leaf springs (430a, 430b), which lie diametrically opposite one another relative to said axis (408) and lie in a radial plane, wherein said second joint part (404) is connected to said third joint part (406) via two second leaf springs (436a, 436b), which are diametrically opposite one another relative to said axis (408) and lie in a radial plane, wherein said pairs of leaf springs (430a/430b, 436a/436b) define with their regions between fastening points with said joint parts (402, 404, 406) a first joint axis (442) and a second joint axis (444), and **in that** said joint axes (442, 444) are perpendicular to one another, wherein said joint parts (402, 404, 406) have projections (410a, 410b, 414a, 414b, 418a, 418b, 424a, 424b), which point to one another and are arranged offset over the circumference, and on whose radial end faces said leaf springs (430a, 430b, 436a, 436b) are fastened.

## Revendications

1. Télescope comprenant une articulation (400) pour le support cardanique d'un module optique (20) par rapport à un boîtier (22), l'articulation (400) étant réalisée sous forme d'articulation à ressort élastique, **caractérisé en ce que** l'articulation (400) présente une première partie d'articulation (402), une deuxième partie d'articulation (404) et une troisième partie d'articulation (406), qui sont disposées les unes à côté des autres le long d'un axe (408), **en ce que** la première partie d'articulation (402) est connectée à la deuxième partie d'articulation (404) par le biais de deux premiers ressorts à lames (430a, 430b) situés de manière diamétralement opposée l'un à l'autre par rapport à l'axe (408) et dans un plan radial, **en ce que** la deuxième partie d'articulation (404) est connectée à la troisième partie d'articulation (406) par le biais de deux deuxièmes ressorts à lames (436a, 436b) situés de manière diamétralement opposée l'un à l'autre par rapport à l'axe (408) et dans le plan radial, **en ce que** les paires de ressorts à lames (430a/430b, 436a/436b), avec leurs régions entre les points de fixation, définissent avec les parties d'articulation (402, 404, 406) un premier axe d'articulation (442) et un deuxième axe d'articulation (444), et **en ce que** les axes d'articulation (442, 444) sont perpendiculaires l'un à l'autre, les parties d'articulation (402, 404, 406) présentant des saillies tournées les unes vers les autres (410a, 410b, 414a, 414b, 418a, 418b, 424a, 424b), qui sont disposées de manière décalée sur la périphérie et sur les faces frontales desquelles sont fixés les ressorts à lames (430a, 430b, 436a, 436b).
